# EUROPÄISCHE PATENTSCHRIFT

(11) **EP 3 423 728 B1**
(45) Veröffentlichungstag und Bekanntmachung des Hinweises auf die Patenterteilung: **09.06.2021**
(21) Anmeldenummer: 17706777.4
(22) Anmeldetag: 23.02.2017
(51) Int. Cl.: F16D 13/72, F01P 11/14, F16D 25/12

(54) **VERFAHREN ZUM ERMITTELN EINES VERHALTENS EINES IN EINEM FAHRZEUG VERBAUTEN VENTILS, SOWIE EIN FAHRZEUG**
METHOD FOR ASCERTAINING BEHAVIOR OF A VALVE INSTALLED IN A VEHICLE, AND VEHICLE
PROCÉDÉ DE DÉTERMINATION D'UN COMPORTEMENT D'UNE SOUPAPE MONTÉE DANS UN VÉHICULE, ET VÉHICULE

(30) Priorität: 03.03.2016 DE 102016203549
(43) Veröffentlichungstag der Anmeldung: 09.01.2019
(73) Patentinhaber: Audi AG, 85045 Ingolstadt (DE)
(72) Erfinder: AMMLER, Stefan, 86673 Bergheim (DE)
(86) Internationale Anmeldenummer: PCT/EP2017/054126
(87) Internationale Veröffentlichungsnummer: WO 2017/148784

(56) Entgegenhaltungen:
- WO-A1-2015/155964
- DE-A1- 3 402 120
- DE-A1- 10 105 666
- DE-A1-102013 219 897
- DE-B4-102012 204 492
- US-A1- 2016 047 374

## Beschreibung

Die Erfindung betrifft ein Verfahren zum Ermitteln eines Verhaltens eines in einem Fahrzeug verbauten Ventils, sowie ein Fahrzeug.

Aus dem allgemeinen Stand der Technik und insbesondere aus dem Serienfahrzeugbau ist es bekannt, dass in Fahrzeugen wie beispielsweise Kraftwagen Ventile zum Einsatz kommen, mittels welchen eine jeweilige Strömung eines Mediums wie beispielsweise einer Flüssigkeit eingestellt werden kann. Üblicherweise ist das jeweilige Ventil in einer jeweiligen Leitung angeordnet und umfasst wenigstens ein Ventilelement, welches zwischen wenigstens einer ersten Stellung und wenigstens einer zweiten Stellung verstellbar beziehungsweise bewegbar ist. In der ersten Stellung ist beispielsweise zumindest ein Teilbereich eines von dem Medium durchströmbaren Strömungsquerschnitts der Leitung mittels des Ventilelements fluidisch versperrt. In der wenigstens einen zweiten Stellung gibt das Ventilelement den Teilbereich frei, sodass das Medium durch den Teilbereich hindurchströmen kann.

Das Ventil umfasst beispielsweise einen elektrisch betreibbaren Aktor, mittels welchem das Ventilelement verstellbar beziehungsweise bewegbar ist. Zum Verstellen des Ventilelements wird der Aktor beispielsweise von einer elektronischen Recheneinrichtung des Fahrzeugs angesteuert, sodass aus dieser Ansteuerung eine Verstellung beziehungsweise Bewegung des Ventilelements resultiert. Die aus der Ansteuerung resultierende Bewegung beziehungsweise Verstellung des Ventils ist dabei ein aus der Ansteuerung resultierendes Verhalten des Ventils. Dabei ist die präzise Kenntnis des aus der Ansteuerung resultierenden Verhaltens des Ventils beziehungsweise des Ventilelements wünschenswert, um das Ventil, insbesondere das Ventilelement, durch jeweilige Ansteuerungen präzise verstellen zu können, sodass wiederum die Strömung des Mediums präzise eingestellt werden kann. Dabei hat es sich jedoch gezeigt, dass das aus der Ansteuerung resultierende Verhalten des Ventils beispielsweise aufgrund von Toleranzen variieren kann.

Des Weiteren offenbart die DE 10 2013 219 897 A1 ein Verfahren zum Ermitteln einer Kenngröße eines Kühlmittelkreislaufs eines Fahrzeugs. Dabei wird eine Kühlmittelpumpe des Kühlmittelkreislaufs als ein Sensor eingesetzt, wobei durch eine elektronische Einrichtung des Fahrzeugs die Kenngröße des Kühlmittelkreislaufs ermittelt wird.

Der DE 34 02 120 A1 ist ein Verfahren zur Regelung verschiedener Betriebsparameter bei Pumpen und Verdichtern als bekannt zu entnehmen, wobei die Regelung nach Kennlinien der Betriebsparameter gemäß der gewünschten Betriebsart erfolgt, und wobei die Messung einzelner Betriebsparameter zur Aufstellung der Kennlinien außerhalb des Fördermediums erfolgt.

Des Weiteren offenbart die DE 101 05 666 A1 eine Kühlvorrichtung für einen flüssigkeitsgekühlten Verbrennungsmotor.

Ferner ist aus der DE 10 2012 204 492 B4 ein Verfahren zum Überprüfen der Funktionstüchtigkeit von Hydraulikkomponenten in einem geschlossenen Kühlkreislauf eines Kraftfahrzeugs bekannt.

Die WO 2015/155964 A1 beziehungsweise die EP 3 130 777 A1 offenbart eine Kühleinrichtung für einen Verbrennungsmotor, mit einem Kühlwasserströmungspfad, durch welchen Kühlwasser des Verbrennungsmotors strömt.

Aufgabe der vorliegenden Erfindung ist es, ein Verfahren und ein Fahrzeug zu schaffen, mittels welchen ein besonders präziser Betrieb eines in dem Fahrzeug verbauten Ventils zum Einstellen einer Strömung eines Mediums auf besonders einfache Weise realisierbar ist.

Diese Aufgabe wird durch ein Verfahren mit den Merkmalen des Patentanspruchs 1 sowie durch ein Fahrzeug mit den Merkmalen des Patentanspruchs 6 gelöst. Vorteilhafte Ausgestaltungen mit zweckmäßigen Weiterbildungen der Erfindung sind in den übrigen Ansprüchen angegeben.

Ein erster Aspekt der Erfindung betrifft ein Verfahren zum Ermitteln eines aus einer Ansteuerung resultierenden Verhaltens eines in einem Fahrzeug verbauten Ventils zum Einstellen einer Strömung eines Mediums, insbesondere einer Flüssigkeit. Unter dem in dem Fahrzeug verbauten Ventil ist zu verstehen, dass sich das Ventil im Rahmen des Verfahrens nicht etwa in einem vom Fahrzeug unterschiedlichen Prüfstand befindet, sondern das Ventil ist an dem Fahrzeug montiert, das heißt in dem Fahrzeug verbaut und nimmt dabei seine Einbaulage ein, wobei das Ventil seine Einbaulage in fertig hergestelltem Zustand des Fahrzeugs einnimmt.

Das Verfahren umfasst einen ersten Schritt, bei welchem eine einen Elektromotor und wenigstens ein Pumpenelement zum Fördern des Mediums aufweisende Pumpe betrieben wird, sodass mittels der Pumpe das Medium gefördert wird, indem mittels des Elektromotors das Pumpenelement angetrieben wird. Zum Betreiben der Pumpe wird der Elektromotor beispielsweise mit elektrischem Strom versorgt, sodass das Pumpenelement mittels des Elektromotors angetrieben wird. Dadurch wird das Medium mittels des Pumpenelements, beispielsweise zu dem und insbesondere durch das Ventil, gefördert.

Das Verfahren umfasst einen zweiten Schritt, bei welchem das Ventil mittels einer elektronischen Recheneinrichtung des Fahrzeugs angesteuert wird. Dabei ist es vorzugsweise vorgesehen, dass auch die elektronische Recheneinrichtung in dem Fahrzeug verbaut ist und dabei ihre Einbaulage einnimmt. Somit ist vorzugsweise auch die elektronische Recheneinrichtung nicht etwa eine Recheneinrichtung eines von dem Fahrzeug separaten Prüfstandes, sondern die elektronische Recheneinrichtung, welche beispielsweise auch als Steuergerät bezeichnet wird, ist Bestandteil oder Komponente des fertig hergestellten Fahrzeugs. Beispielsweise wird das Ventil mittels der elektronischen Recheneinrichtung elektrisch angesteuert, indem beispielsweise Signale, insbesondere elektrische Signale, von der elektronischen Recheneinrichtung an das Ventil übermittelt und insbesondere von dem Ventil empfangen werden. Dabei wird die Ansteuerung des Ventils mittels der elektronischen Recheneinrichtung variiert. Dies bedeutet, dass nicht etwa eine konstante Ansteuerung des Ventils mittels der elektronischen Recheneinrichtung durchgeführt wird, sondern die Ansteuerung des Ventils ändert sich über die Zeit.

Das Verfahren umfasst einen dritten Schritt, bei welchem wenigstens ein den Betrieb der Pumpe charakterisierender Parameter erfasst wird, während das Medium mittels der Pumpe gefördert und während die Ansteuerung des Ventils variiert wird. Ferner umfasst das Verfahren einen vierten Schritt, bei welchem das aus der Ansteuerung, insbesondere aus der variierenden Ansteuerung, resultierende Verhalten des Ventils in Abhängigkeit von dem Parameter ermittelt wird.

Der Erfindung liegt insbesondere die folgende Erkenntnis zugrunde: Üblicherweise ist es nicht oder nur sehr aufwändig möglich, eine Ventilkennlinie eines Ventils für ein Fahrzeug einzustellen. Das Einstellen beziehungsweise das Ermitteln der Ventilkennlinie ist jedoch wünschenswert, um das Ventil auf Basis der Kennlinie zu betreiben, insbesondere anzusteuern, wobei die Kennlinie beispielsweise einen Zusammenhang zwischen einer jeweiligen Ansteuerung des Ventils und einem aus der jeweiligen Ansteuerung resultierenden Zustand des Ventils abbildet. In dem jeweiligen Zustand nimmt beispielsweise wenigstens ein Ventilelement des Ventils eine jeweilige Stellung ein.

Die präzise Ermittlung der Ventilkennlinie ist wünschenswert, um das Ventil präzise betreiben, insbesondere das Ventilelement präzise verstellen beziehungsweise bewegen, zu können, sodass unerwünschte Volumenströme des beispielsweise als Flüssigkeit ausgebildeten Mediums vermieden werden können. Kann eine solche Ventilkennlinie nicht eingestellt beziehungsweise ermittelt werden, so kann es vorteilhaft sein, wenigstens eine Stellung des Ventilelements präzise zu ermitteln, indem diese Stellung beispielsweise angelernt beziehungsweise eingelernt wird. Dies ist üblicherweise jedoch nur mithilfe eines Prüfstand beziehungsweise einer Prüfanlage im Rahmen der Fertigung des Ventils, das heißt vor dem Einbau des Ventils in das Fahrzeug möglich, da der Prüfstand entsprechende Messeinrichtungen umfasst, mittels welchen die Stellung des Ventilelements beziehungsweise ein aus einer Ansteuerung des Ventils resultierendes Verhalten des Ventils präzise ermittelt werden kann.

Wird jedoch beispielsweise nach einem jeweiligen Einbau des Ventils und eines Steuergeräts zum Ansteuern des Ventils in ein Fahrzeug das Ventil aufgrund eines Defekts gegen ein neues, anderes Ventil ausgetauscht, so gehen beispielsweise mittels der Prüfanlage gewonnene Informationen hinsichtlich des Zusammenhangs zwischen Ansteuerung und Verhalten des Ventils verloren. Eine Adaption des neuen, anderen Ventils, das heißt eine Ermittlung des aus der Ansteuerung des anderen Ventils resultierenden Verhaltens des anderen Ventils in dessen im Fahrzeug verbauten Zustand ist üblicherweise nicht vorgesehen. Üblicherweise können das Ventil, insbesondere dessen Verhalten, charakterisierende Daten nur mit Hilfe eines Prüfstands ermittelt werden.

Das erfindungsgemäße Verfahren ermöglicht es nun jedoch, auf besonders einfache und kostengünstige Weise das aus einer entsprechenden Ansteuerung resultierende Verhalten des im Fahrzeug verbauten Ventils besonders präzise zu ermitteln, sodass das Ventil, insbesondere dessen Ventilelement zum Einstellen der Strömung des Mediums, besonders präzise verstellt, insbesondere bewegt, werden kann, um dadurch die Strömung des Mediums besonders präzise und bedarfsgerecht beeinflussen beziehungsweise einstellen zu können. Dabei werden im Rahmen des erfindungsgemäßen Verfahrens im Fahrzeug verbaute und ohnehin vorhandene Komponenten in Form des Ventils, der Pumpe und der elektronischen Recheneinrichtung genutzt, um das Verhalten des Ventils, insbesondere zumindest eine Stellung des Ventilelements, einzulernen. Dabei muss im Rahmen des erfindungsgemäßen Verfahrens nicht auf vom Fahrzeug unterschiedliche, externe Vorrichtungen zurückgegriffen werden, sondern das Verfahren kann einzig und allein mittels des Fahrzeugs und somit einfach und kostengünstig durchgeführt werden. Ferner kann auf die zuvor beschriebene, zeit- und kostenaufwändige Ermittlung des Verhaltens des Ventils im Rahmen der Fertigung des Ventils verzichtet werden, sodass das erfindungsgemäße Verfahren auch eine besonders zeit- und kostengünstige Herstellung des Ventils ermöglicht.

Darüber hinaus ist es üblicherweise erforderlich, das Ventil insbesondere bezüglich seiner Mittellage besonders präzise herzustellen, was zu hohen Ausschussquoten im Rahmen der Fertigung des Ventils führen kann. Da es mittels des erfindungsgemäßen Verfahrens möglich ist, das Verhalten des Ventils in seinem im Fahrzeug verbauten Zustand zu ermitteln, können beispielsweise fertigungsbedingte Toleranzen des Ventils kompensiert werden, sodass das Ventil an sich besonders einfach und kostengünstig hergestellt werden kann. Dadurch können übermäßig hohe Ausschussquoten während der Fertigung des Ventils vermieden werden.

Der Parameter umfasst eine Stromaufnahme des Elektromotors. Darunter ist zu verstehen, dass der Elektromotor mit elektrischem Strom versorgt wird, um mittels des Elektromotors das Pumpenelement anzutreiben. Der Elektromotor wandelt zumindest einen Teil des ihm zugeführten elektrischen Stroms in mechanische Energie um, mittels welcher das Pumpenelement schließlich angetrieben wird. Dieses Versorgen des Elektromotors mit elektrischem Strom wird auch als Stromaufnahme des Elektromotors bezeichnet, wobei zumindest diese Stromaufnahme des Elektromotors erfasst wird. Hierdurch kann das Verhalten des Ventils auf besonders einfache und kostengünstige Weise ermittelt werden.

Bei dem Betrieb der Pumpe wird der Elektromotor mit einer konstanten Drehzahl betrieben. Der Elektromotor umfasst beispielsweise einen Stator und einen um eine Drehachse relativ zu dem Stator drehbaren Rotor, welcher während des Betriebs der Pumpe mit einer Drehzahl relativ zum Stator um die Drehachse rotiert. Dabei ist es vorzugsweise vorgesehen, dass die Drehzahl zumindest im Wesentlichen konstant ist. Die Pumpe, welche einen Volumenstrom des Mediums bereitstellt, wird beispielsweise in einem definierten Temperaturfenster des Mediums bei einer definierten und insbesondere konstanten Drehzahl des Elektromotors, insbesondere des Rotors, betrieben. Mittels der Pumpe wird somit beispielsweise das Medium durch das Ventil hindurch gefördert. Wird nun beispielsweise die Ansteuerung des Ventils variiert, so wird dadurch ein durch das Ventil bewirkter Durchflusswiderstand für das Medium variiert, was wiederum zu einer Änderung der Stromaufnahme des Elektromotors führt. Dadurch kann der Einfluss der Ansteuerung des Ventils auf die Strömung des Mediums ermittelt werden, wodurch das aus der Ansteuerung resultierende Verhalten des Ventils präzise ermittelt werden kann.

Bei einer weiteren vorteilhaften Ausführungsform der Erfindung wird durch das Ansteuern des Ventils wenigstens ein Ventilelement des Ventils bewegt. Das Ventilelement ist beispielsweise zumindest teilweise in einer von dem Medium durchströmbaren Leitung angeordnet, wobei das Ventilelement relativ zu der Leitung bewegbar ist. Dabei wird das Ventilelement durch das Ansteuern des Ventils bewegt. Beispielsweise umfasst das Ventil einen Aktor, insbesondere einen elektrischen Aktor, mittels welchem das Ventilelement infolge des Ansteuerns des Ventils verstellbar beziehungsweise bewegbar ist. Mit anderen Worten wird beispielsweise das Ventilelement mittels des Aktors, insbesondere elektrisch, bewegt, wenn das Ventil angesteuert wird. Das Ventilelement ist somit mittels des Aktors in mehrere, unterschiedliche Stellungen bewegbar. Durch Variieren der Ansteuerung des Ventils wird das Ventilelement somit in unterschiedliche Stellungen bewegt, woraus die zuvor beschriebene Veränderung des von dem Ventil bewirkten Durchflusswiderstands für das Medium resultiert.

Zum Bewegen des Ventilelements wird der Aktor beispielsweise mit elektrischem Strom versorgt, sodass auch das Ventil beziehungsweise der Aktor einer Stromvorgabe unterliegt. Im Rahmen des Variierens der Ansteuerung wird das Versorgen des Ventils mit elektrischem Strom variiert, sodass die Stromvorgabe des Ventils sich über der Zeit verändert. Die Stromvorgabe des Ventils, insbesondere des Aktors des Ventils, wird auch als Ventilstrom bezeichnet. Beispielsweise wird das Ventil mittels einer Rampe des Ventilstroms angesteuert, sodass der Ventilstrom beispielsweise im Rahmen der Variierung der Ansteuerung des Ventils über der Zeit zumindest im Wesentlichen konstant zunimmt. Dadurch kann auf besonders einfache und präzise Weise der Einfluss der Ansteuerung des Ventils auf die Strömung des Mediums ermittelt werden, wobei nicht die Veränderung der Strömung des Mediums selbst, sondern der Parameter erfasst wird. Somit kann über den Parameter auf den Einfluss der Ansteuerung des Ventils auf die Strömung des Mediums rückgeschlossen werden, sodass nach Ermitteln dieses Einflusses beziehungsweise des Verhaltens des Ventils die Strömung des Mediums mittels des Ventils besonders präzise durch entsprechendes Ansteuern des Ventils eingestellt werden kann.

Als besonders vorteilhaft hat es sich dabei gezeigt, wenn mittels des Verfahrens wenigstens eine zwischen zwei Endlagen des Ventilelements liegende Stellung, insbesondere eine Mittellage, des Ventilelements ermittelt wird. Ist die Mittellage ermittelt, so kann ausgehend von der Mittellage das Ventilelement durch entsprechendes Ansteuern des Ventils besonders präzise bewegt werden, um dadurch die Strömung des Mediums besonders präzise einstellen zu können.

In weiterer Ausgestaltung der Erfindung wird mittels des Verfahrens eine Ventilkennlinie des Ventils ermittelt. Die Ventilkennlinie bildet beispielsweise einen Zusammenhang zwischen der Ansteuerung des Ventils, insbesondere dem Ventilstrom, und jeweiligen Stellungen des Ventilelements ab, wobei die jeweiligen Stellungen des Ventilelements mit jeweiligen Strömungen des Mediums korrespondieren. Somit kann in der Folge das Ventil auf Basis der Ventilkennlinie besonders präzise verstellt werden, wobei die Ventilkennlinie auf besonders einfache und kostengünstige Weise ermittelt werden kann. Eine weitere Ausführungsform zeichnet sich dadurch aus, dass als das Ventil ein Ventil zum Einstellen einer Strömung eines Öls zu wenigstens einer Kupplung des Fahrzeugs und als die Pumpe eine Pumpe zum Fördern des Öls verwendet wird. Dieser Ausführungsform liegt die Erkenntnis zugrunde, dass es bei einem solchen Ventil und einer solchen Pumpe üblicherweise nicht möglich ist, das aus der Ansteuerung des Ventils resultierende Verhalten des Ventils zu übermitteln. Dieses Problem kann mittels des erfindungsgemäßen Verfahrens auf einfache und kostengünstige Weise gelöst werden.

Mit anderen Worten dient das Ventil beispielsweise dem Einstellen wenigstens einer der Kupplung zuzuführenden Menge eines Öls, wobei die Kupplung mittels des Öls beispielsweise gekühlt wird.

Ein zweiter Aspekt der Erfindung betrifft ein Fahrzeug, insbesondere ein Kraftfahrzeug, welches zum Durchführen eines erfindungsgemäßen Verfahrens ausgebildet ist. Vorteile und vorteilhafte Ausgestaltungen des erfindungsgemäßen Verfahrens sind als Vorteile und vorteilhafte Ausgestaltungen des erfindungsgemäßen Fahrzeugs anzusehen und umgekehrt.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: ein Diagramm zum Veranschaulichen einer ersten Ausführungsform eines Verfahrens zum Ermitteln eines aus einer Ansteuerung resultierenden Verhaltens eines in einem Fahrzeug verbauten Ventils;
- Fig. 2: ein weiteres Diagramm zum Veranschaulichen einer zweiten, nicht zur Erfindung gehörenden Ausführungsform des Verfahrens;

- Fig. 3: eine schematische Darstellung eines Hydrauliksystems für ein Fahrzeug, mit wenigstens einem Hydraulikkreis, in welchem ein Ventil angeordnet ist;
- Fig. 4: eine schematische Darstellung des Ventils; und
- Fig. 5: eine Kennlinie des Ventils.

In den Figuren sind gleiche oder funktionsgleiche Elemente mit gleichen Bezugszeichen versehen.

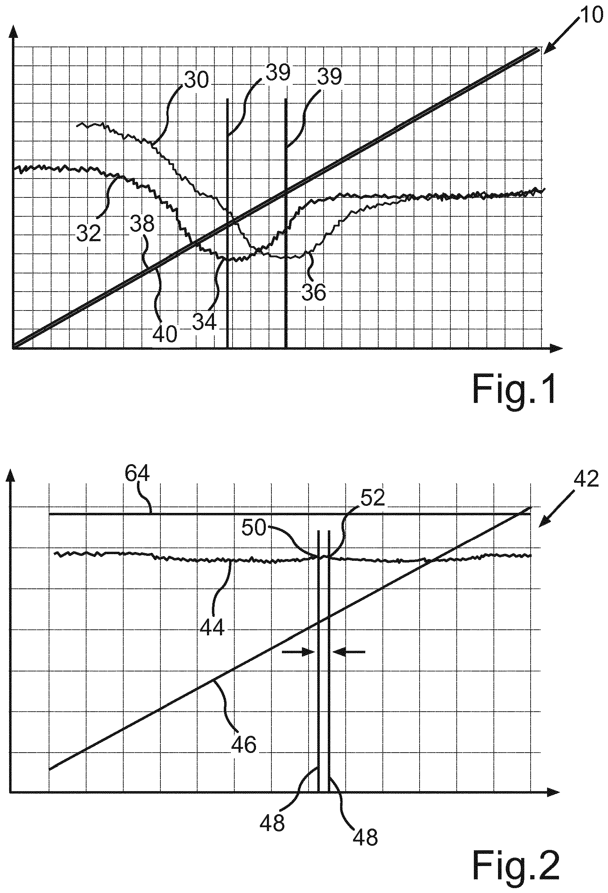

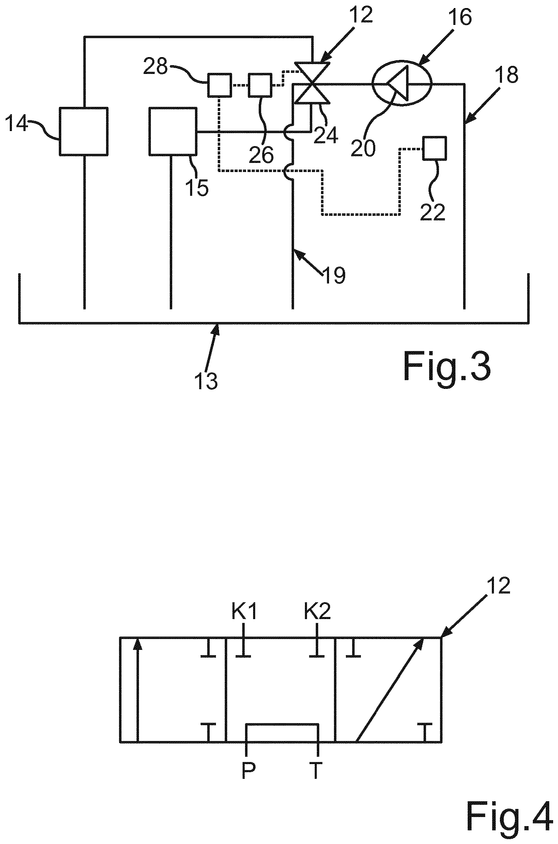

Fig. 1 zeigt ein Diagramm 10 zum Veranschaulichen einer ersten Ausführungsform eines Verfahrens zum Ermitteln eines aus einer Ansteuerung resultierenden Verhaltens eines in einem Fahrzeug verbauten und in Fig. 3 schematisch dargestellten Ventils 12 zum Einstellen einer Strömung eines als Flüssigkeit ausgebildeten Mediums.

Das Ventil 12 kommt beispielsweise in einem in Fig. 3 schematisch dargestellten Hydrauliksystem des Fahrzeugs zum Einsatz. Das Hydrauliksystem weist wenigstens einen von dem Medium durchströmbaren Hydraulikkreis 18 auf, wobei das Medium ein ÖI ist. Das Hydrauliksystem umfasst ferner wenigstens eine in dem Hydraulikkreis 18 angeordnete Pumpe 16 zum Fördern des Öls. Von einem Sumpf 13 wird mittels der Pumpe 16 das ÖI durch den Hydraulikkreis 18 und dabei zu dem Ventil 12 gefördert. Dabei umfasst die Pumpe 16 wenigstens ein Pumpenelement 20 und einen Elektromotor 22, mittels welchem das Pumpenelement 20 antreibbar ist beziehungsweise angetrieben wird. Durch Antreiben des Pumpenelements 20 wird das ÖI mittels des Pumpenelements 20 durch den Hydraulikkreis gefördert.

Um das Pumpenelement 20 mittels des Elektromotors 22 anzutreiben, wird der Elektromotor 22 mit elektrischem Strom versorgt, sodass der Elektromotor 22 einen Stromverbrauch beziehungsweise eine Stromaufnahme aufweist.

Das Ventil 12 ist als verstellbares beziehungsweise einstellbares Ventil ausgebildet und umfasst wenigstens ein Ventilelement 24, welches beispielsweise zumindest teilweise in wenigstens einer Leitung des Hydraulikkreises 18 angeordnet ist. Das Ventilelement 24 ist beispielsweise zwischen wenigstens zwei Stellung verstellbar, das heißt bewegbar.

Aus Fig. 4 ist erkennbar, dass das Ventil 12 vorliegend als 4/3-Wege-Ventil ausgebildet ist und dabei drei Schaltpositionen und vier Anschlüsse P, T, K1 und K2 aufweist. Unter den drei Schaltpositionen ist zu verstehen, dass das Ventilelement 24 in drei unterschiedliche Stellung bewegbar ist. Zum Bewegen des Ventilelements 24 umfasst das Ventil 12 einen Aktor 26, welcher beispielsweise ein elektrischer Aktor und somit elektrisch betätigbar ist. Beispielsweise handelt es sich bei dem Aktor 26 um einen Elektromagneten beziehungsweise einen Elektromotor. Zum Bewegen des Ventilelements 24 wird der Aktor 26 mit elektrischem Strom versorgt, wobei dieser elektrische Strom, mit welchem der Aktor 26 beziehungsweise das Ventil 12 versorgt wird, auch als Ventilstrom bezeichnet wird.

Ferner sind in dem Hydraulikkreis 18 zwei Kupplungen 14 und 15 des Fahrzeugs angeordnet. Außerdem weist der Hydraulikkreis 18 eine Leitung 19 auf, über welche das ÖI die Kupplungen 14 und 15 umgehen kann. Darunter ist zu verstehen, dass das die Leitung 19 durchströmende ÖI die Kupplungen 14 und 15 umgeht und somit nicht zu den beziehungsweise durch die Kupplungen 14 und 15 strömt. Das ÖI wird beispielsweise verwendet, um die jeweiligen, beispielsweise als Reibkupplungen ausgebildeten Kupplungen 14 und 15 des Fahrzeugs zu kühlen.

Das Fahrzeug ist beispielsweise ein Kraftfahrzeug, welches einen Antriebsmotor wie beispielsweise eine Verbrennungskraftmaschine umfasst. Der Antriebsmotor umfasst beispielsweise eine Abtriebswelle, über welche der Antriebsmotor Drehmomente zum Antreiben des Kraftfahrzeugs bereitstellen kann. Zumindest eine der Kupplungen 14 und 15 ist beispielsweise zwischen einem geschlossenen Zustand und einem geöffneten Zustand verstellbar. In dem geschlossenen Zustand ist die Abtriebswelle über die jeweilige Kupplung 14 beziehungsweise 15 beispielsweise mit einer weiteren Welle des Fahrzeugs gekoppelt, sodass Drehmomente zwischen der Abtriebswelle und der weiteren Welle übertragen werden können. In dem geöffneten Zustand ist die weitere Welle beispielsweise von der Abtriebswelle entkoppelt, sodass keine Drehmomente zwischen der Abtriebswelle und der weiteren Welle über die Kupplung 14 beziehungsweise 15 übertragen werden können.

Das Fahrzeug umfasst dabei das Hydrauliksystem und somit den Hydraulickreis 18, die Pumpe 16, das Pumpenelement 20, den Elektromotor 22, das Ventil 12, das Ventilelement 24, den Aktor 26 sowie die Kupplungen 14 und 15, sodass das Hydrauliksystem eine Komponente des vollständig hergestellten Fahrzeugs und somit in dem Fahrzeug verbaut ist. Ferner umfasst das Fahrzeug eine elektronische Recheneinrichtung 28, welche auch als Steuergerät bezeichnet wird. Das Steuergerät kann das Ventil 12, insbesondere den Aktor 26, ansteuern. Insbesondere kann das Steuergerät (elektronische Recheneinrichtung 28) den Aktor 26 elektrisch ansteuern, indem beispielsweise elektrische Signale von der elektronischen Recheneinrichtung 28 an den Aktor 26 übertragen und von dem Aktor 26 empfangen werden. Durch das mittels der elektronischen Recheneinrichtung 28 bewirkte Ansteuern des Ventils 12 wird beispielsweise der Ventilstrom eingestellt. Durch Variieren der Ansteuerung des Ventils 12 wird beispielsweise der Ventilstrom variiert, wodurch das Ventilelement 24 beispielsweise in unterschiedliche Stellung, das heißt in die unterschiedlichen Schaltpositionen bewegt werden kann, um dadurch beispielsweise unterschiedliche Strömungen beziehungsweise Volumenströme des ÖI einzustellen.

Dies bedeutet, dass aus der Ansteuerung des Ventils 12 eine Bewegung beziehungsweise eine Stellung des Ventilelements 24 resultiert. Dabei ist es wünschenswert, die jeweilige, aus der jeweiligen, entsprechenden Ansteuerung des Ventils 12 resultierende Stellung des Ventilelements 24 präzise zu kennen, um die Strömung des Öls präzise einstellen zu können. Die jeweilige, aus der jeweiligen Ansteuerung des Ventils 12 resultierende Bewegung beziehungsweise Stellung des Ventilelements 24 wird auch als aus der Ansteuerung resultierendes Verhalten des Ventils 12 bezeichnet, da sich das Ventil 12, insbesondere das Ventilelement 24, entsprechend der Ansteuerung verhält beziehungsweise bewegt.

In Abhängigkeit von der Stellung des Ventils 12, insbesondere des Ventilelements 24, und somit in Abhängigkeit von der Ansteuerung des Ventils 12, insbesondere des Aktors 26, wird das von der Pumpe 16 kommende ÖI über die Kupplung 14 und/oder über die Kupplung 15 und/oder über die Leitung 19 wieder dem beispielsweise in einem Tank aufgenommenen Sumpf 13 zugeführt. Mit anderen Worten wird das Ventil 12 genutzt, um beispielsweise eine zu der Kupplung 14 strömende erste Menge des Öls, eine zu der Kupplung 15 strömende zweite Menge des Öls und eine durch die Leitung 19 strömende dritte Menge des Öls einzustellen.

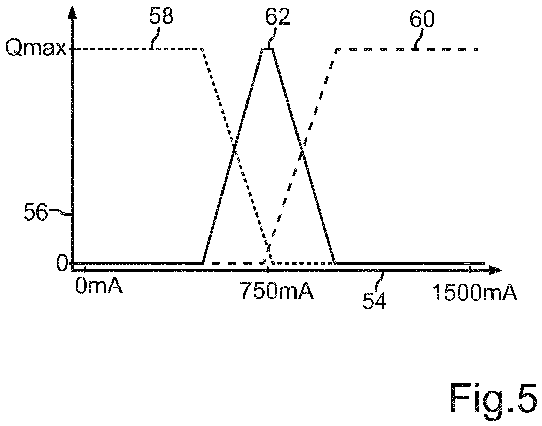

Dabei zeigt Fig. 5 eine Kennlinie des Ventils 12, wobei diese Kennlinie nominal für das Ventil 12 gilt. Auf der Abszisse 54 ist der Ventilstrom in der Einheit Milliampere (mA) aufgetragen, wobei auf der Ordinate 56 der Volumenstrom des Öls, insbesondere durch das Ventil 12, aufgetragen ist. Mit Qmax ist der maximale Volumenstrom des Öls bezeichnet. Bei 0 strömt kein ÖI. In Fig. 5 veranschaulicht ein Verlauf 58 den Volumenstrom des Öls zu der Kupplung 14. Ferner veranschaulicht ein Verlauf 60 den Volumenstrom des Öls zu der Kupplung 15, und ein Verlauf 62 veranschaulicht den Volumenstrom des Öls zu der beziehungsweise durch die Leitung 19.

Eine erste der Stellungen des Ventilelements 24 beispielsweise ist eine erste Endlage, wobei eine zweite der Stellungen eine zweite Endlage des Ventilelements 24 ist. Die dritte Stellung ist beispielsweise eine zwischen den Endlagen, insbesondere genau in der Mitte zwischen den Endlagen, liegende Mittelstellung des Ventilelements 24, wobei die Mittelstellung auch als Mittellage bezeichnet wird.

Bei nominal 750 Milliampere nimmt das Ventil 12 beziehungsweise das Ventilelement 24 seine Mittelstellung ein. Diese Mittelstellung ist dabei die Stellung des Ventils 12 beziehungsweise des Ventilelements 24, in welcher das ÖI beziehungsweise dessen Volumenstrom ausschließlich über die Leitung 19 - nicht jedoch über die Kupplungen 14 und 15 - zum Sumpf 13 geleitet wird, sodass weder die Kupplung 14 noch die Kupplung 15 mit ÖI beaufschlagt beziehungsweise versorgt wird.

Das Ventilelement 24 nimmt die erste Stellung bei nominal 0 Milliampere ein. Bei nominal 1500 Milliampere nimmt das Ventilelement 24 die zweite Endlage ein. Die erste Endlage ist somit eine Stellung zur ausschließlichen Beaufschlagung der ersten Kupplung 14, wobei die zweite Stellung eine Stellung zur ausschließlichen Beaufschlagung der zweiten Kupplung 15 ist.

Fig. 1 veranschaulicht nun eine erste Ausführungsform eines Verfahrens, mittels welchem das aus der Ansteuerung des Ventils 12 resultierende Verhalten des Ventils 12 besonders präzise und einfach und kostengünstig ermittelt werden kann. Bei einem ersten Schritt des Verfahrens wird die Pumpe 16 betrieben, sodass mittels der Pumpe 16 das ÖI gefördert wird, indem mittels des Elektromotors 22 das Pumpenelement 20 angetrieben wird. Bei einem zweiten Schritt des Verfahrens wird das Ventil 12 mittels der elektronischen Recheneinrichtung 28 angesteuert, wobei die Ansteuerung des Ventils 12 mittels der elektronischen Recheneinrichtung 28 variiert wird. Bei einem dritten Schritt des Verfahrens wird wenigstens ein den Betrieb der Pumpe 16 charakterisierender Parameter erfasst, während die Flüssigkeit (ÖI) mittels der Pumpe 16 zu dem und insbesondere durch das Ventil 12 gefördert und während die Ansteuerung des Ventils 12 variiert wird.

Ferner wird bei einem vierten Schritt des Verfahrens das Verhalten des Ventils 12 in Abhängigkeit von dem erfassten Parameter ermittelt. Bei der ersten Ausführungsform ist es vorgesehen, dass der Parameter zumindest die Stromaufnahme des Elektromotors 22 umfasst. In das Diagramm 10 sind Verläufe 30 und 32 eingetragen, welche die Stromaufnahme des Elektromotors 22 über der Zeit veranschaulichen. Diese Stromaufnahme des Elektromotors 22 wird auch als Motorstrom bezeichnet. Aus Fig. 1 ist erkennbar, dass die Verläufe jeweilige Minima 34 und 36 aufweisen. Ferner sind in das Diagramm 10 Verläufe 38 und 40 eingetragen, welche jeweils den Ventilstrom und somit die Ansteuerung, das heißt die variierende Ansteuerung veranschaulichen.

Im Rahmen des Variierens der Ansteuerung wird das Ventil 12, insbesondere der Aktor 26, mittels einer durch den Verlauf 38 veranschaulichten steigenden Rampe und/oder mittels einer durch den Verlauf 40 veranschaulichten fallenden Rampe des Ventilstroms angesteuert. Ferner ist bei der ersten Ausführungsform vorgesehen, dass bei dem Betrieb der Pumpe 16 der Elektromotor 22 mit einer konstanten Drehzahl betrieben wird. Dabei ist es insbesondere vorgesehen, dass der Elektromotor 22 in einem definierten Temperaturfenster des Öls bei einer definierten und konstanten Drehzahl betrieben wird. Wird nun der Ventilstrom in Form einer steigenden Rampe (Verlauf 38) und/oder einer fallenden Rampe (Verlauf 40) eingestellt, so verändern sich die Stellung des Ventilelements 24 und somit ein durch das Ventil 12, insbesondere durch das Ventilelement 24, bewirkter Durchflusswiderstand für das das Ventil 12 durchströmende Öl, sodass sich der Durchflusswiderstand insbesondere in Abhängigkeit von dem Ventilstrom verändert.

Dies führt wiederum zu einer Änderung der Stromaufnahme des Elektromotors 22, was anhand der Verläufe 30 und 32 erkennbar ist. Der Verlauf 30 veranschaulicht beispielsweise den Motorstrom bei steigendem Ventilstrom (Verlauf 40), wobei der Verlauf 32 beispielsweise den Motorstrom bei fallendem Ventilstrom (Verlauf 38) veranschaulicht. Beispielsweise im jeweiligen Bereich der auch als Grenzlagen bezeichneten Endlagen und der Mittellage des Ventilelements 24 ist der Durchflusswiderstand am geringsten, sodass sich in diesen Bereichen die geringste Stromaufnahme des Elektromotors 22 einstellt. Diese geringste Stromaufnahme erfolgt somit an den Stellen der Minima 34 und 36 und ist in Fig. 1 durch senkrechte Linien 39 veranschaulicht.

Die Stromaufnahme des Elektromotors 22, das heißt der jeweilige Verlauf 30 beziehungsweise 32 und insbesondere das jeweilige Minima 34 beziehungsweise 36 und somit die Mittellage können durch eine Minimalwert-Auswertung des jeweiligen Verlaufs 30 beziehungsweise 32 erkannt werden. Der zugehörige Ventilstrom stellt somit die Mittellage des Ventilelements 24 dar. Mit anderen Worten kommt es zu dem zum jeweiligen Minimum 34 beziehungsweise 36 gehörenden Ventilstrom in der Mittellage des Ventilelements 24. Wird das Verfahren beispielsweise mehrmals aufeinanderfolgend mit steigender und fallender Rampe des Ventilstroms durchgeführt, so können eine etwaige Hysterese der Mittellage und deren Streuung bestimmt und in einer Speichereinrichtung wie beispielsweise einem EEPROM des beispielsweise als Getriebesteuergerät ausgebildeten Steuergeräts (elektronische Recheneinrichtung 28) abgespeichert werden. Das Verfahren kann sowohl im Neuzustand direkt nach der Herstellung des Fahrzeugs als auch in einem Reparaturfall im Fahrzeug durchgeführt werden, sodass nicht auf separate Prüfeinrichtungen zurückgegriffen werden muss.

Fig. 2 zeigt ein Diagramm 42, mittels welchem ein nicht erfindungsgemäßes Beispiel veranschaulicht wird. Bei diesem Beispiel umfasst der Parameter eine Drehzahl des Elektromotors, wobei bei dem Betrieb der Pumpe 16 der Elektromotor mit einem konstanten elektrischen Strom betrieben wird. In das Diagramm ist ein den Motorstrom veranschaulichender Verlauf 64 eingetragen, anhand dessen erkannt werden kann, dass der Motorstrom zumindest im Wesentlichen konstant ist.

In das Diagramm 42 ist ferner ein Verlauf 44 eingetragen, welcher die Drehzahl des Elektromotors 22 über der Zeit veranschaulicht. Außerdem ist in das Diagramm 42 ein Verlauf 46 eingetragen, welcher den Ventilstrom und somit die variierende Ansteuerung des Ventils 12 veranschaulicht. Bei diesem Beispiel wird der Elektromotor 22 beispielsweise in einem definierten Temperaturfenster des Öls mit seiner Maximaldrehzahl betrieben, wobei diese Maximaldrehzahl zum einen durch den maximal zulässigen Motorstrom und zum anderen durch den Durchflusswiderstand für das ÖI begrenzt wird. Wird nun der Elektromotor 22 mit dem maximal zulässigen Motorstrom betrieben und wird der Ventilstrom variiert, insbesondere in Form einer steigenden oder fallenden Rampe, so verändert sich der Durchflusswiderstand in Abhängigkeit von dem Ventilstrom, was wiederum zu einer Änderung der Drehzahl des Elektromotors 22 führt. Diese Änderung der Drehzahl des Elektromotors 22 kann anhand des Verlaufs 44 ermittelt werden. Im vorliegenden Beispiel ist der durch das Ventil 12 bewirkte Durchflusswiderstand für das ÖI im Bereich der Grenzlagen und der Mittellage des Ventils 12, insbesondere des Ventilelements 24, am geringsten, wodurch sich hier die höchsten Drehzahlen einstellen können. Dies ist in Fig. 2 durch vertikale Linien 48 veranschaulicht, welche - wie die vertikalen Linien 39 in Fig. 1 - beispielsweise die Hysterese der Mittellage des Ventilelements 24 begrenzen beziehungsweise veranschaulichen.

Der Verlauf 44 weist beispielsweise ein Maximum 50 bei fallendem Ventilstrom und ein Maximum 52 bei steigendem Ventilstrom auf, wobei die Linien 48 durch die Maxima 50 und 52 verlaufen. Das jeweilige Maximum 50 beziehungsweise 52 ist somit eine Drehzahlüberhöhung im Bereich der Mittellage, wobei diese Drehzahlüberhöhung durch eine Maximalwert-Auswertung des Verlaufs 44 erkannt werden kann. Der zugehörige Ventilstrom stellt die Mittellage des Ventils 12, insbesondere des Ventilelements 24, dar. Wird das Verfahren mehrmals mit steigender und fallender Rampe des Ventilstroms durchgeführt, so können eine etwaige Hysterese der Mittellage und deren Streuung bestimmt und in der Speichereinrichtung der elektronischen Recheneinrichtung 28 abgespeichert werden. Auch dieses Beispiel kann im Reparaturfall durchgeführt werden.

## Patentansprüche

1. Verfahren zum Ermitteln eines aus einer Ansteuerung resultierenden Verhaltens eines in einem Fahrzeug verbauten Ventils (12) zum Einstellen einer Strömung eines Mediums, mit den Schritten:
- Betreiben einer einen Elektromotor (22) und wenigstens ein Pumpenelement (20) zum Fördern des Mediums aufweisenden Pumpe (16), sodass mittels der Pumpe (16) das Medium gefördert wird, indem mittels des Elektromotors (22) das Pumpenelement (20) angetrieben wird;
- Ansteuern des Ventils (12) mittels einer elektronischen Recheneinrichtung (28) des Fahrzeugs, wobei die Ansteuerung des Ventils (12) mittels der elektronischen Recheneinrichtung (28) variiert wird;
- Während das Medium mittels der Pumpe (16) gefördert und während die Ansteuerung des Ventils (12) variiert wird: Erfassen wenigstens eines den Betrieb der Pumpe (16) charakterisierenden Parameters; und
- Ermitteln des Verhaltens des Ventils (12) in Abhängigkeit von dem erfassten Parameters
**dadurch gekennzeichnet, dass**
der Parameter eine Stromaufnahme des Elektromotors (22) umfasst, wobei bei dem Betrieb der Pumpe (16) der Elektromotor (22) mit einer konstanten Drehzahl betrieben wird.

2. Verfahren nach Anspruch 1,
**dadurch gekennzeichnet, dass**
durch das Ansteuern des Ventils (12) wenigstens ein Ventilelement (24) des Ventils (12) bewegt wird.

3. Verfahren nach Anspruch 2,
**dadurch gekennzeichnet, dass**
mittels des Verfahrens wenigstens eine zwischen zwei Endlagen des Ventilelements (24) liegende Stellung des Ventilelements (24) ermittelt wird.

4. Verfahren nach einem der vorhergehenden Ansprüche,
**dadurch gekennzeichnet, dass**
mittels des Verfahrens eine Ventilkennlinie des Ventils (12) ermittelt wird.

5. Verfahren nach einem der vorhergehenden Ansprüche,
**dadurch gekennzeichnet, dass**
als das Ventil (12) ein Ventil (12) zum Einstellen einer Strömung eines Öls zu wenigstens einer Kupplung (14) des Fahrzeugs und als die Pumpe (16) eine Pumpe (16) zum Fördern des Öls verwendet wird.

6. Fahrzeug, insbesondere Kraftfahrzeug, welches zum Durchführen eines Verfahrens nach einem der vorhergehenden Ansprüche ausgebildet ist.

## Claims

1. Method for ascertaining control-caused behaviour of a valve (12) installed in a vehicle for adjusting a flow of a medium, comprising the following steps:
- operating a pump (16), which has an electric motor (22) and at least one pump element (20) for conveying the medium, such that the medium is conveyed by means of the pump (16), in that the pump element (20) is driven by means of the electric motor (22),
- controlling the valve (12) by means of an electronic computing apparatus (28) of the vehicle, wherein the control of the valve (12) is varied by means of the electronic computing apparatus (28),
- while the medium is conveyed by means of the pump (16) and while the control of the valve (12) is varied: sensing at least one parameter that characterises the operation of the pump (16), and
- Ascertaining the behaviour of the valve (12) in accordance with the sensed parameter
**characterised in that**
the parameter comprises a power consumption of the electric motor (22), wherein when operating the pump (16), the electric motor (22) is operated at a constant speed.

2. Method according to claim 1,
**characterised in that**,
by controlling the valve (12), at least one valve element (24) of the valve (12) is moved.

3. Method according to claim 2,
**characterised in that**,
by means of the method, at least one position of the valve element (24) lying between two limit positions of the valve element (24) is determined.

4. Method according to any of the preceding claims,
**characterised in that**,
by means of the method, a valve characteristic curve of the valve (12) is determined.

5. Method according to any of the preceding claims,
**characterised in that**,
a valve (12) for adjusting a flow of an oil to at least one clutch (14) of the vehicle is used as the valve (12) and a pump (16) for conveying the oil is used as the pump (16).

6. Vehicle, in particular a motor vehicle, which is designed for implementing a method according to any of the preceding claims.

## Revendications

1. Procédé pour déterminer un comportement résultant d'une commande d'une soupape (12) obstruée dans un véhicule pour le réglage d'un écoulement d'un milieu, avec les étapes :
- de fonctionnement d'une pompe (20) présentant un moteur électrique (22) et au moins un élément de pompe (20) pour le refoulement du milieu de sorte que, au moyen de la pompe (16) le milieu est refoulé en entraînant l'élément de pompe (20) au moyen du moteur électrique (22) ;
- de commande de la soupape (12) au moyen d'un dispositif de calcul électronique (28) du véhicule, dans lequel la commande de la soupape (12) varie au moyen du dispositif de calcul électronique (28) ;
- pendant que le milieu est refoulé au moyen de la pompe (16) et varie pendant la commande de la soupape (12) : détection d'au moins un paramètre caractérisant le fonctionnement de la pompe (16) ; et
- de détermination du comportement de la soupape (12) en fonction du paramètre détecté
**caractérisé en ce que**
le paramètre comprend une absorption de courant du moteur électrique (22), dans lequel lors du fonctionnement de la pompe (16) le moteur électrique (22) fonctionne avec une vitesse de rotation constante.

2. Procédé selon la revendication 1,
**caractérisé en ce que**
au moins un élément de soupape (24) de la soupape (12) est déplacé par la commande de la soupape (12).

3. Procédé selon la revendication 2,
**caractérisé en ce que**
au moyen du procédé au moins une position de l'élément de soupape (24) qui se trouve entre deux positions terminales de l'élément de soupape (24) est déterminée.

4. Procédé selon l'une quelconque des revendications précédentes,
**caractérisé en ce que**
au moyen du procédé une courbe caractéristique de soupape de la soupape (12) est déterminée.

5. Procédé selon l'une quelconque des revendications précédentes,
**caractérisé en ce que**
en tant que soupape (12) une soupape (12) est utilisée pour le réglage d'un écoulement d'une huile vers au moins un couplage (14) du véhicule et en tant que pompe (16) une pompe (16) est utilisée pour le refoulement de l'huile.

6. Véhicule, en particulier véhicule automobile, qui est réalisé pour l'exécution d'un procédé selon l'une quelconque des revendications précédentes.
